# EUROPÄISCHE PATENTSCHRIFT

(11) **EP 1 883 791 B1**
(45) Veröffentlichungstag und Bekanntmachung des Hinweises auf die Patenterteilung: **30.08.2017**
(21) Anmeldenummer: 06755076.4
(22) Anmeldetag: 08.05.2006
(51) Int. Cl.: G01F 1/66, G01F 23/296

(54) **VERFAHREN ZUR BESTIMMUNG UND/ODER ÜBERWACHUNG EINER PROZESSGRÖSSE**
METHOD FOR DETERMINING AND MONITORING A PROCESS PARAMETER
PROCEDE PERMETTANT DE DETERMINER ET/OU DE SURVEILLER UNE GRANDEUR DE PROCESSUS

(30) Priorität: 23.05.2005 DE 102005024134
(43) Veröffentlichungstag der Anmeldung: 06.02.2008
(73) Patentinhaber: Endress+Hauser Flowtec AG, 4153 Reinach (CH)
(72) Erfinder: BERGER, Andreas, CH-4106 Therwil (CH); WANDELER, Frank, CH-5405 Baden-Dättwil (CH); WIEST, Achim, 79576 Weil am Rhein (DE)
(74) Vertreter: Andres, Angelika Maria
(86) Internationale Anmeldenummer: PCT/EP2006/062131
(87) Internationale Veröffentlichungsnummer: WO 2006/125722

(56) Entgegenhaltungen:
- EP-A- 1 182 452
- DE-A1- 10 118 934
- US-A- 5 883 309

## Beschreibung

Die Erfindung betrifft ein Verfahren zur Bestimmung und/oder Überwachung einer Prozessgröße. Bei der Prozessgröße handelt es sich bevorzugt um den Volumen- oder Massedurchfluss eines Mediums durch eine Rohrleitung oder durch einen Kanal. Entsprechende Ultraschall-Durchflussmessgeräte werden von der Anmelderin angeboten und vertrieben. Weiterhin kann es sich bei der Prozessgröße auch um den Füllstand eines Füllguts in einem Behälter handeln, der mittels eines Ultraschall-Laufzeitverfahren ermittelt wird. Generell lässt sich sagen, dass das erfindungsgemäße Verfahren in allen Messgeräten einsetzbar ist, bei denen Ultraschall-Messsignale ausgesendet und empfangen werden.

Ohne Einschränkung wird im Nachfolgenden Bezug genommen auf ein Ultraschall-Durchflussmessgerät. Ein Inline-Ultraschall-Durchflussmessgerät ist üblicherweise in eine Rohrleitung integriert, in der ein Messmedium strömt. Ultraschall-Durchflussmessgeräte, die nach der Laufzeitdifferenz-Methode arbeiten, weisen zumindest ein Paar von Ultraschallsensoren auf, die Ultraschall-Messsignale entlang definierter Schallpfade aussenden und/oder empfangen. Eine Regel-/Auswerteeinheit ermittelt den Volumen- und/oder den Massedurchfluss des Messmediums in der Rohrleitung anhand der Differenz der Laufzeiten der Messsignale in Strömungsrichtung des Messmediums und entgegen der Strömungsrichtung des Messmediums. Bei dem Messmedium kann es sich um ein gasförmiges oder um ein flüssiges Medium handeln.

Neben den zuvor beschriebenen Inline-Ultraschall-Durchflussmessgeräten kommen auch Clamp-On-Durchflussmessgeräte zum Einsatz, die von außen auf der Rohrleitung montiert werden und die den Volumen- bzw. Masse-durchfluss durch die Rohrwand hindurch messen.

Ultraschall-Durchflussmessgeräte der zuvor beschriebenen Art, die den Volumen- oder den Massedurchfluss ermitteln, werden vielfach in der Prozess- und Automatisierungstechnik eingesetzt. Clamp-On-Durchfluss-messgeräte haben den Vorteil, dass sie es ermöglichen, den Volumen- oder Massedurchfluss in einem Behältnis, z.B. in einer Rohrleitung, ohne Kontakt mit dem Medium zu bestimmen. Clamp-On-Durchflussmessgeräte sind beispielsweise in der EP 0 686 255 B1, der US-PS 4,484,478, DE 43 35 369 C1, DE 298 03 911 U1, DE 4336370 C1 oder der US-PS 4,598,593 beschrieben.

Bei beiden Typen von Ultraschall-Durchflussmessgeräten werden die Ultraschall-Messsignale unter einem vorgegebenen Winkel in die Rohrleitung, in der das Messmedium strömt, eingestrahlt bzw. aus der Rohrleitung ausgestrahlt. Bei Ultraschall-Durchflussmessgeräten ist die jeweilige Position der Ultraschallwandler am Messrohr (Inline) bzw. an der Rohrleitung (Clamp-On) abhängig vom Innendurchmesser des Messrohres und von der Schallgeschwindigkeit des Messmediums. Bei einem Clamp-On-Durchfluss-messgerät müssen zusätzlich die Applikationsparameter: Wandstärke der Rohrleitung und Schallgeschwindigkeit des Materials der Rohrleitung berücksichtigt werden.

Üblicherweise sind bei beiden Typen von Ultraschall-Durchflussmessgeräten die Ultraschallsensoren so angeordnet, dass die durchlaufenen Schallpfade durch den Zentralbereich der Rohrleitung bzw. des Messrohres geführt sind. Der ermittelte Durchflussmesswert spiegelt somit den mittleren Durchfluss des Messmediums. Bei vielen Anwendungen, insbesondere bei Durchfluss-messungen in Rohrleitungen mit großen Nennweiten, ist diese Mittelung jedoch zu ungenau. Deshalb ist auch bekannt geworden, mehrere Sensor-paare über den Umfang verteilt an dem Messrohr bzw. an der Rohrleitung vorzusehen, wodurch die Durchflussinformation aus verschiedenen segmentierten Winkelbereichen des Messrohres bzw. der Rohrleitung zur Verfügung steht.

Die wesentliche Komponente eines Ultraschallsensors ist ein piezo-elektrisches Element. Die wesentliche Komponente eines piezoelektrischen Elements ist eine piezokeramische Schicht, bei der es sich um eine Folie oder um eine Membran handelt. Die Piezokeramik ist zumindest in einem Teilbereich metallisiert. Durch Anlegen eines elektrischen Anregungssignals wird die piezoelektrische Schicht in Schwingung versetzt. Ein Ultraschallsensor würde ideal funktionieren, wenn das piezoelektrische Element exakt dem elektrischen Anregungssignal folgen würde - dies ist jedoch in der Praxis nicht der Fall. Vielmehr werden durch das Anregungssignal üblicherweise auch Oberwellen und Resonanzen angeregt, die sich dem eigentlichen sog. Nutzsignal überlagern und es in seiner Signalform verändern. Hierdurch wird die Messgenauigkeit eines auf dem piezoelektrischen Effekt basierenden Messverfahrens mitunter erheblich eingeschränkt.

DE10118934 offenbart eine Vorrichtung zur Messung einer Prozessgröße, z.B. ein Ultraschall-Durchflussmessgerät, wobei das Empfangssignal mit einer Schaltschwelle verglichen wird, und das Sendesignal entsprechend durch eine Verstärkung geregelt wird. Somit kann eine Alterung der Vorrichtung kontrolliert werden.

US5883309 offenbart eine Vorrichtung zur Materialprüfung anhand eines Ultraschal-Impuls-Echo-Verfahrens. Das Empfangssignal wird mit einem Soll-Signal verglichen, und das Sendesignal wird durch eine Rückkoppelung entsprechend geregelt.

Der Erfindung liegt die Aufgabe zugrunde, ein Verfahren vorzuschlagen, mit dem ein optimiertes Signal-/Rauschverhältnis bei einem Ultraschallsensor erreicht wird.

Die Aufgabe wird durch ein Verfahren gemäß Anspruch 1 gelöst, das die folgenden Verfahrens-schritte umfasst:
- ein zeitlich begrenztes Anregungssignal, das durch zumindest eine SOLL-Größe bzw. durch eine SOLL-Signalform beschrieben wird, wird einem ersten piezoelektrischen Element oder einer ersten polarisierten Zone eines piezoelektrischen Elements zugeführt;
- das Antwortsignal, das durch zumindest eine zur SOLL-Größe bzw. zur SOLL-Signalform korrespondierende IST-Größe bzw. IST-Signalform beschrieben wird, wird von einem zweiten piezoelektrischen Element oder von einer zweiten polarisierten Zone des piezoelektrischen Elements aufgenommen;
- die IST-Größe bzw. die IST-Signalform des Antwortsignals und die SOLL-Größe bzw. die SOLL-Signalform des Antwortsignals werden miteinander verglichen;
- im Falle einer Abweichung der IST-Größe bzw. der IST-Signalform des Antwortsignals von der SOLL-Größe bzw. der SOLL-Signalform des Antwortsignals wird das Anregungssignal so modifiziert, dass die IST-Größe bzw. die IST-Signalform von dem ersten piezoelektrischen Element bzw. von der ersten Zone des piezoelektrischen Elements ausgesendeten Messsignal zumindest näherungsweise gleich ist der SOLL-Größe bzw. der SOLL-Signalform des Antwortsignals;
- anhand des Messsignals, das durch die definierte SOLL-Größe bzw. die definierte SOLL-Signalform beschreibbar ist, wird die Prozessgröße über ein Schall-Mitnahmeverfahren oder über ein Echoverfahren bestimmt.

Das erfindungsgemäße Verfahren besteht in der Rückkopplung - entweder in Echtzeit oder zeitverschoben - der Auslenkung des piezoelektrischen Elements auf das elektrische Anregungssignal. Wie bereits erwähnt, wird ein Ultraschall-Messsignal durch die Verwendung von piezoelektrischen Elementen oder von piezoelektrischen Folien bzw. Membranen erzeugt. Bekannte piezokeramische Elemente sind polarisiert und bestehen üblicherweise aus einer Scheibe, die auf beiden Seiten metallisiert ist. Die Auslenkung der Oberfläche geschieht durch das Anlegen einer elektrischen Spannung zwischen den beiden metallisierten Flächen. Das Empfangen eines Ultraschall-Messsignals erfolgt über die Umkehrung des zuvor beschriebenen Prozesses. Dies ist möglich, da der Prozess reversibel ist.

Gemäß einer vorteilhaften Weiterbildung des erfindungsgemäßen Verfahrens ist vorgesehen, dass das durch die vorgegebene SOLL-Größe bzw. die SOLL-Signalform beschriebene Anregungssignal erzeugt wird, dass das Anregungs-signal einer ersten polarisierten Zone des piezoelektrischen Elements zugeführt wird, dass durch die zumindest eine IST-Größe bzw. durch die IST-Signalform beschriebene Antwortsignal in einer zweiten polarisierten Zone des piezoelektrischen Elements abgegriffen wird und dass im Falle einer Abweichung der IST-Größe bzw. der IST-Signalform des Antwortsignals von der SOLL-Größe bzw. der SOLL-Signalform des Antwortsignals das Anregungssignal so modifiziert wird, dass das Antwortsignal zumindest näherungsweise durch die vorgegebene SOLL-Größe bzw. die SOLL-Signalform beschrieben wird. Realisiert wird das Verfahren im einfachsten Fall über eine Rückkopplung.

Um die Auslenkung des piezoelektrischen Elements durch ein angelegtes Spannungssignal zu messen, wird erfindungsgemäß in einer ersten Ausführungsform zumindest eine zusätzliche metallisierte und polarisierte Zone auf dem Piezoelement vorgesehen. An dieser zusätzlichen zweiten polarisierten Zone wird die Spannung gemessen, die von der Auslenkung des Piezoelementes abhängig ist. Über eine Linearisierung anhand einer Referenzmessung des angelegten Spannungssignals relativ zur Auslenkung und anhand einer Phasenkompensation der Verzögerung der an der Schwingung beteiligten mechanischen und elektrischen Komponenten lässt sich das piezoelektrische Element in seinem Schwingverhalten optimal an die gewünschte SOLL-Signalform anpassen. Bevorzugt werden Endstufe und die Kompensationsschaltung übrigens der Einfachheit halber analog ausführen.

Darüber hinaus wird gemäß einer alternativen Ausführungsform das durch die vorgegebene SOLL-Größe bzw. SOLL-Signalform beschriebene Anregungs-signal dem ersten piezoelektrischen Element zugeführt; das durch eine zur SOLL-Größe bzw. zur SOLL-Signalform korrespondierende IST-Größe bzw. IST-Signalform beschriebene Antwortsignal wird nachfolgend an dem zweiten piezoelektrischen Element, das von dem ersten piezoelektrischen Element räumlich getrennt ist, abgegriffen; im Falle einer Abweichung der IST-Größe bzw. der IST-Signalform des Antwortsignals von der SOLL-Größe bzw. der SOLL-Signalform des Antwortsignals wird das Anregungssignal anschließend so modifiziert, dass das Antwortsignal zumindest näherungsweise durch die vorgegebene SOLL-Größe bzw. SOLL-Signalform beschrieben werden kann.

Bei dieser zweiten alternativen Ausführungsform des erfindungsgemäßen Verfahrens wird also ein zweites piezoelektrisches Element benutzt, welches im Schallpfad des ersten piezoelektrischen Elementes angeordnet ist. Dieses zweite piezoelektrische Element hat eine Kontrollfunktion und misst die vom ersten piezo-elektrischen Element ausgesendete Signalform. Anhand der gemessenen Signalform wird das Ultraschall-Messsignal so modifiziert, dass das erste piezoelektrische Element die gewünschte Signalform aussendet. Das zweite piezoelektrische Element wird also zur unmittelbaren Kompensation von unerwünschten Oberwellen des Ultraschall-Messsignals verwendet.

In gewissen Anwendungen kann nun der Fall auftreten, dass die Phasen-differenz durch die Laufzeit des Ultraschall-Messsignals zwischen dem ersten piezoelektrischen Element und dem zweiten piezoelektrischen Element, das die Funktion eines Kontroll-Piezoelements hat, zu groß wird, so dass eine unmittelbare Rückkopplung nicht möglich ist. In diesem Fall erfolgt die Einstellung der gewünschten Signalform mittels eines alternativen Verfahrens, welches es gleichfalls ermöglicht, Oberwellen und Resonanzen des ausgesendeten Ultraschall-Messsignals geeignet zu kompensieren. Hierzu wird das vom ersten piezoelektrischen Element ausgesandte Ultraschall-Messsignal ebenfalls durch ein zweites piezoelektrisches Element mit Kontrollfunktion gemessen. Die Signalform bzw. eine anderweitige charakteristische Größe des gemessenen Ultraschall-Messsignals wird mit einer SOLL-Signalform bzw. SOLL-Größe verglichen. Aus der Differenz der beiden Messsignale wird neues Anregungssignal generiert und gespeichert. Für die nächste Anregung des piezoelektrischen Elements wird dieses neu generierte und gespeicherte Anregungssignal verwendet. Das ausgesandte Ultraschall-Messsignal wird erneut gemessen, mit dem gewünschten Anregungssignal verglichen und aus der Differenz wird ein wiederum modifiziertes Anregungssignal generiert und gespeichert. Durch iterative Anwendung des Verfahrens wird die IST-Signalform des aktuellen Ultraschall-Messsignals der gewünschten SOLL-Signalform des Ultraschall-Messsignals sukzessive angenähert.

Eine Weiterbildung zu den beiden zuvor genannten Varianten des erfindungsgemäßen Verfahrens sieht vor, dass die IST-Größe bzw. die IST-Signalform des Antwortsignals durch Änderung der an die erste Zone des piezoelektrischen Elements angelegten Spannung oder durch Änderung der an das erste piezoelektrische Element angelegten Spannung modifiziert wird.

Weiterhin wird, wie bereits zuvor erwähnt, vorgeschlagen, dass die SOLL-Spannung des Antwortsignals mit der IST-Spannung des Antwortsignals verglichen wird und dass eine Abweichung zwischen den beiden Spannungen über eine Differenzverstärkung korrigiert wird.

Eine vorteilhafte Ausgestaltung des erfindungsgemäßen Verfahrens sieht darüber hinaus vor, dass die SOLL-Signalform des Antwortsignals ermittelt und in Abhängigkeit von den im Prozess und/oder im System herrschenden Bedingungen jeweils als Signalform des Anregungssignal abgespeichert wird und dass die auf die jeweils herrschenden Prozess- und/oder System-bedingungen abgestimmte Signalform als Anregungssignal für die zumindest eine Zone des piezoelektrischen Elements oder als Anregungssignal für das erste piezoelektrische Element verwendet wird.

Weiterhin wird vorgeschlagen, dass die unter bestimmten Prozess- und/oder Systembedingungen ermittelte Signalform als Anregungssignal dem ersten piezoelektrischen Element zugeführt wird und dass im Falle einer Abweichung der Signalform des zweiten piezoelektrischen Elements von der in Abhängigkeit von Prozess- und/oder Systembedingungen gespeicherten Signalform des Anregungssignals eine Fehlermeldung generiert wird. Eine Abweichung von einer unter vorgegebenen Bedingungen vorab ermittelten Korrektur des Ultraschall-Messsignals wird hier also zur Fehlererkennung herangezogen.

Wie bereits zuvor erwähnt, handelt es sich bei dem piezoelektrischen Element um ein scheibenförmig ausgebildetes Element, welches zwei gegenüber-liegende Stirnflächen aufweist. Das piezoelektrische Element ist eine Folie oder eine Membran.

Bevorzugt weist das piezoelektrische Element in unterschiedlichen Zonen eine voneinander unabhängige Polarisation auf; darüber hinaus ist es vorteilhaft, wenn die Zonen mit der voneinander unabhängigen Polarisation auf derselben Stirnfläche des piezoelektrischen Elements angeordnet sind. Dies vereinfacht in vielen Fällen die Verdrahtung.

Die zur Durchführung des erfindungsgemäßen Verfahrens geeignete Vorrichtung weist einen Signalgenerator auf, der das zeitlich begrenzte durch eine Größe bzw. eine Signalform beschriebene Anregungssignal der ersten polarisierten Zone des piezoelektrischen Elements zuführt. Weiterhin ist eine Korrekturschaltung vorgesehen, die die korrespondierende IST-Größe bzw. die korrespondierende IST-Signalform des Antwortsignals aus der zweiten polarisierten Zone des piezoelektrischen Elements abgreift und mit der SOLL-Größe bzw. der SOLL-Signalform des Antwortsignals vergleicht; die Korrekturschaltung beaufschlagt die erste polarisierte Zone im Falle einer Abweichung der SOLL-Größe und IST-Größe bzw. der SOLL-Signalform und IST-Signalform des Antwortsignals mit einem Kompensationssignal, das so bemessen ist, dass die IST-Größe bzw. die IST-Signalform des Antwortsignals näherungsweise gleich ist der SOLL-Größe bzw. die SOLL-Signalform des Antwortsignals.

Anstelle der Beeinflussung eines piezoelektrischen Elements mit unterschied-lich polarisierten Zonen sieht eine alternative Ausgestaltung der Vorrichtung zwei piezoelektrische Elemente vor, die in unmittelbarer Nachbarschaft zueinander angeordnet sind. Allgemein lässt sich sagen, dass das zweite piezoelektrische Element im Schallpfad des ersten piezoelektrischen Elements angeordnet ist. Zur Vermeidung von Reflexionen ist erfindungsgemäß zwischen den beiden piezoelektrischen Elementen ein Koppelmedium angeordnet.

Kommt das Verfahren zur Anwendung, das eine iterative Anpassung des ausgesandten Ultraschall-Messsignals an ein Ultraschall-Messsignal mit einer vorgegebenen SOLL-Signalform vorschlägt, so ist eine Speichereinheit vorgesehen, in der Größen bzw. Signalformen des Antwortsignals in Abhängigkeit von den im Prozess- und/oder System herrschenden Bedingungen abgespeichert sind.

In diesem Zusammenhang ist es dann auch möglich, die erfindungsgemäße Vorrichtung zur Erkennung von Fehlern im System oder Prozess heran-zuziehen. Hierzu ist eine Auswerteeinheit vorgesehen, die eine Abweichung einer IST-Größe oder einer IST-Signalform des Antwortsignals von der entsprechenden, unter definierten Prozess- und/oder Systembedingungen aufgezeichneten SOLL-Größe bzw. SOLL-Signalform des Antwortsignals erkennt und eine entsprechende Fehlermeldung generiert.

Die Erfindung wird anhand der nachfolgenden Figuren näher erläutert. Es zeigt:
Fig. 1: eine Draufsicht auf die Stirnfläche eines aus dem Stand der Technik bekannten piezoelektrischen Elements,
Fig. 1a: einen Querschnitt gemäß der Kennzeichnung A-A in Fig. 1,
Fig. 2: ein Spannungssignal, das zur Anregung eines piezoelektrischen Elements des Standes der Technik verwendet wird,
Fig. 3: ein Antwortsignal auf das in Fig. 2 dargestellte Spannungssignal,
Fig. 4: eine erste Ausführungsform eines piezoelektrischen Elements mit zwei unterschiedlich polarisierten Zonen,
Fig. 4a: einen Querschnitt gemäß der Kennzeichnung A-A in Fig. 4,
Fig. 5: eine zweite Ausführungsform eines piezoelektrischen Elements mit zwei unterschiedlich polarisierten Zonen,
Fig. 5a: einen Querschnitt gemäß der Kennzeichnung A-A in Fig. 5,
Fig. 6: eine erste Schaltungsanordnung, die zur Ansteuerung eines piezoelektrischen Elements mit zwei unterschiedlich polarisierten Zonen geeignet ist,
Fig. 7: eine zweite Schaltungsanordnung, die zur Ansteuerung eines piezoelektrischen Elements mit zwei unterschiedlich polarisierten Zonen geeignet ist,
Fig. 8: eine Schaltungsanordnung zur Ansteuerung eines ersten piezoelektrischen Elements, dem ein zweites piezoelektrisches Element mit Kompensationsfunktion nachgeordnet ist, und
Fig. 9: ein Flussdiagramm zur Durchführung einer bevorzugten Variante des erfindungsgemäßen Verfahrens.

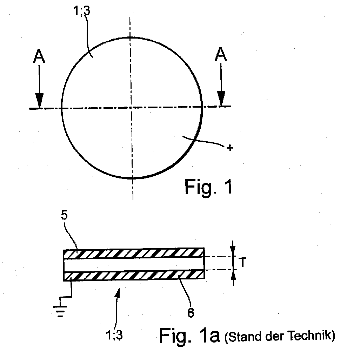

Fig. 1 zeigt eine Draufsicht auf die Stirnfläche 6 eines aus dem Stand der Technik bekannten piezoelektrischen Elements 1. Fig. 1a zeigt das in Fig. 1 dargestellte piezoelektrische Element 1 im Querschnitt gemäß der Kenn-zeichnung A-A. Ein derartiges piezoelektrisches Element 1 ist die wesentliche Komponente eines Ultraschallsensors, wie er beispielsweise zur Durchfluss-messung oder zur Füllstands- und Abstandsmessung verwendet wird. Bei der das piezoelektrische Element 1 bildenden piezokeramischen Schicht handelt es sich um eine Folie oder um eine Membran mit einer beidseitig aufgebrachten, leitfähigen Beschichtung. Aus dem Stand der Technik ist es beispielsweise bekannt geworden, dass die beiden sich gegenüberliegenden Stirnflächen 5, 6 des piezoelektrischen Elements 1 unterschiedlich polarisiert sind. Die Dicke T der piezoelektrischen Schicht bestimmt die Eigenfrequenz des piezoelektrischen Elements.

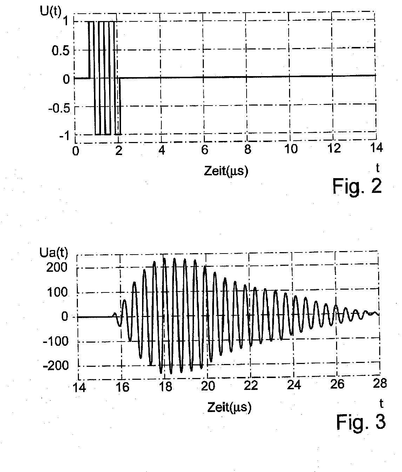

Das piezoelektrische Element 1 wird mittels eines elektrischen Anregungs-signals U(t) zu Schwingungen angeregt. Die Funktionsweise eines Ultraschall-sensors ist als ideal einzustufen, wenn das von dem piezoelektrischen Element 1 ausgesandte Ultraschall-Messsignal in seiner Signalform exakt dem elektrischen Anregungssignal U(t) folgt - dies ist jedoch in der Praxis nicht der Fall. Vielmehr werden durch das Anregungssignal U(t) neben der Grundfrequenz üblicherweise auch Oberwellen und Resonanzen angeregt, die sich dem eigentlichen sog. Nutzsignal überlagern und es in seiner Signalform verändern. Ein Beispiel ist in den Figuren Fig. 2 und Fig. 3 schematisch dargestellt.

Anhand des in Fig. 3 dargestellten Antwortsignals
*Uₐ*
(t) ist verdeutlicht, dass das Antwortsignal
*Uₐ*
(t) gegenüber dem Anregungssignal U(t) eine deutlich längere Abklingzeit hat. Das Anregungssignal U(t) wird von dem Signal-generator 7 erzeugt. Es versteht sich von selbst, dass diese Änderung der Signalform zu erheblichen Messfehlern führt, wenn die Laufzeit der Ultraschall-Messsignale relativ zum Messsignal gesehen klein ist.

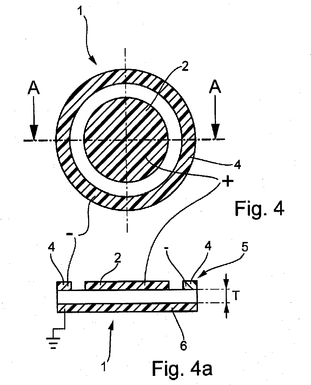

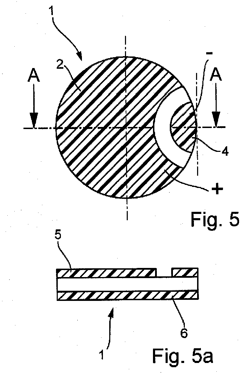

Fig. 4 zeigt eine erste Ausführungsform eines piezoelektrischen Elements 1 mit zwei unterschiedlich polarisierten Zonen 2, 4, welches zur Durchführung einer ersten Variante des erfindungsgemäßen Verfahrens geeignet ist. In Fig. 5 ist eine zweite Ausführungsform eines zur Durchführung des erfmdungs-gemäßen Verfahrens geeigneten piezoelektrischen Elements 1 zu sehen. Die Figuren Fig. 4a und Fig. 5a zeigen jeweils die entsprechenden Querschnitte gemäß der Kennzeichnung A-A in den Figuren Fig. 4 und Fig. 5.

Bei beiden Ausführungsformen sind auf einer Stirnfläche 5 des piezo-elektrischen Elements 1 zwei Zonen 2, 4 mit unterschiedlicher Polarisation vorgesehen. Während die unterschiedlich polarisierten Zonen 2, 4 bei der in Fig. 4 dargestellten Ausführungsform konzentrisch angeordnet sind, zeigen die Zonen 2, 4 der in Fig. 5 gezeigten Ausführungsform einen asymme-trischen Aufbau. Durch Zuführung des Anregungssignals U(t) sendet die erste Zone 2 ein Antwortsignal
*Uₐ*
(t) aus, das von der zweiten Zone 4 des piezoelektrischen Elements 1 in Echtzeit empfangen wird.

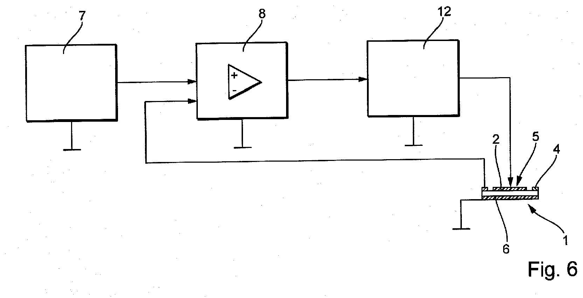

Wie in der in Fig. 6 dargestellten Schaltung zu sehen ist, wird das von der zweiten Zone 4 empfangene Antwortsignal
*Uₐ*
(t) der Korrekturschaltung 8, bei der es sich bevorzugt um eine Differenzverstärkung handelt, zugeführt und über die Endstufe / den Verstärker 12 wieder auf die erste Zone 2 des piezoelektrischen Elements 1 gegeben. Über diese Rückkoppelschaltung wird erreicht, dass das Antwortsignal
*Uₐ*
(t) im eingeschwungenen Zustand zumindest näherungsweise die Signalform des Anregungssignals U(t) aufweist.

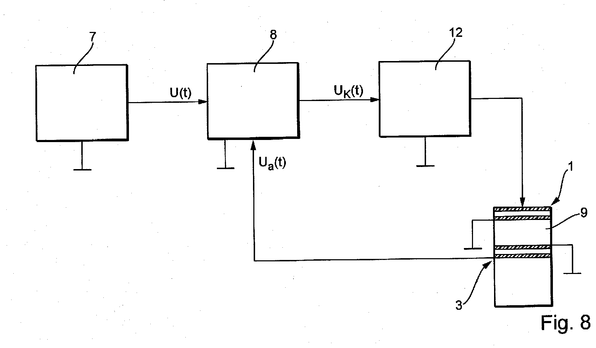

In Fig. 8 ist eine analoge Rückkoppel-Schaltung zur Ansteuerung eines ersten piezoelektrischen Elements 1 dargestellt, dem ein zweites piezoelektrisches Element 3 mit Kompensationsfunktion nachgeordnet ist. Zwischen den beiden piezoelektrischen Elementen 1,3 befindet sich ein Koppelmedium 9, dessen Eigenschaften hinsichtlich z.B. Dämpfung und Reflektionsverhalten an die Eigenschaften der beiden piezoelektrischen Elemente 1, 3 angepasst sind. Bei dieser Ausgestaltung liefert also das zweite piezoelektrische Element 3, das im Schallpfad des ersten piezoelektrischen Elements 1 positioniert ist, das Antwortsignal
*Uₐ*
(t) an die Differenzverstärkerschaltung 8.

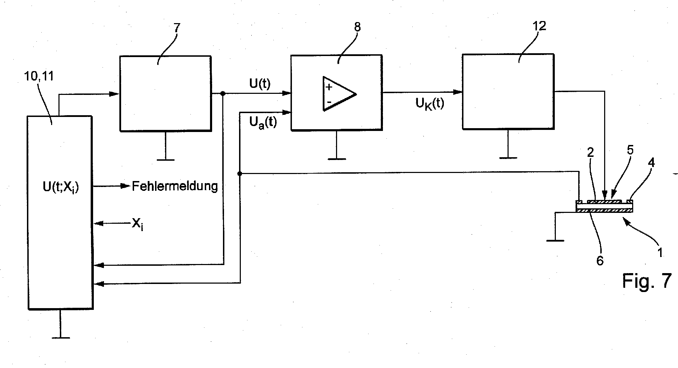

Von der in Fig. 6 gezeigten Schaltungsanordnung unterscheidet sich die in Fig. 7 dargestellte Schaltungsanordnung durch die zusätzliche Speichereinheit 10 und die Auswerteeinheit 11. Diese Schaltungsanordnung ist zur Durch-führung einer bevorzugten Ausführungsform des erfindungsgemäßen Verfahrens geeignet, bei der der Einschwingvorgang des Systems verkürzt ist. Gemäß dieser Ausführungsform wird die die SOLL-Signalform des Antwort-signals
*Uₐ*
(t) ermittelt und in Abhängigkeit von den im Prozess und/oder im System herrschenden Bedingungen
*Xₜ*
jeweils als Signalform des Anregungssignal U(t;
*Xₜ*
) abgespeichert wird; diese auf die jeweils herrschenden Prozess- und/oder Systembedingungen
*Xᵢ*
optimal abge-stimmte und bereits zuvor bestimmte Signalform wird nachfolgend als Anregungssignal U(t;
*Xᵢ*
) für die zumindest eine Zone 2 des piezo-elektrischen Elements 1 oder als Anregungssignal für das erste piezoelektrische Element 1 verwendet.

Weiterhin ist vorgesehen, dass die unter bestimmten Prozess- und/oder Systembedingungen
*Xᵢ*
ermittelte Signalform als Anregungssignal U(t;
*Xᵢ*
) dem ersten piezoelektrischen Element 1 zugeführt wird und dass im Falle einer Abweichung der Signalform des vom zweiten piezoelektrischen Element 1 gelieferten Antwortsignals
*Uₐ*
(t;
*Xᵢ*
) von der unter definierten Prozess- und/oder Systembedingungen
*Xᵢ*
gespeicherten Signalform des Anregungs-signals U(t;
*Xᵢ*
) eine Fehlermeldung generiert wird. Eine Abweichung zwischen dem von dem zweiten piezoelektrischen Element 1 oder der zweiten Zone 3 des piezoelektrischen Elements 1 gelieferten Antwortsignal
*Uₐ*
(t;
*Xₜ*
) wird somit zur Fehlererkennung herangezogen.

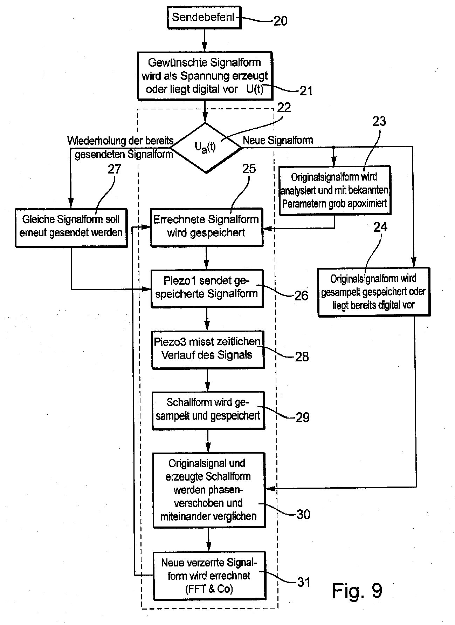

In Fig. 9 ist ein Flussdiagramm zur Durchführung einer bevorzugten Variante des erfindungsgemäßen Verfahrens dargestellt, bei dem die IST-Signalform des Anregungssignals iterativ an die SOLL-Signalform angenähert wird. Mittels dieses Verfahrens ist es möglich, eine Dämpfungs- oder Impedanz-messung oder in Verbindung mit einer Schallgeschwindigkeitsmessung eine Dichtemessung durchzuführen. Auch wird es durch das nachfolgend beschriebene Verfahren ermöglicht, den Verschleiß oder allgemein einen Fehler am als Sender ausgestalteten piezoelektrischen Element 1 zu erkennen.

Allgemein gesprochen, wird bei dieser Ausgestaltung eine iterative Annäherung der Signalform des zur Bestimmung einer Prozessgröße ausgesandten Ultraschall-Messsignals an die gewünschte SOLL-Signalform des Anregungssignals U(t) erreicht. Sobald die IST-Signalform des Anregungssignals mit der SOLL-Signalform übereinstimmt, lassen spätere Änderungen Rückschlüsse auf mögliche System- oder Prozeßfehler erkennen.

Der Programmstart erfolgt bei Punkt 20. Bei Punkt 21 wird die gewünschte SOLL-Signalform als Spannungssignal U(t) an das erste piezoelektrische Element 1 angelegt. Dieses übernimmt somit die Funktion eines Senders. Das zweite piezoelektrische Element 3 empfängt unter dem Programmpunkt 22 das Antwortsignal
*Uₐ*
(t). Somit hat das zweite piezoelektrische Element 3 die Funktion eines Mikrofons.

Unter Programmpunkt 23 wird die SOLL-Signalform analysiert und durch geeignete Parameter beschrieben. Diese ermittelten Parameter werden bei Punkt 25 abgespeichert. Weiterhin wird die SOLL-Signalform gesampelt, gespeichert, oder diese Daten sind unter dem Programmpunkt 24 bereits digital abgespeichert.

Das erste piezoelektrische Element 1 wird unter Punkt 26 mit einem Spannungssignal U(t) beaufschlagt, das die abgespeicherte SOLL-Signalform aufweist. Unter Punkt 28 misst das zweite piezoelektrische Element 3 den tatsächlichen zeitlichen Verlauf der abgespeicherten SOLL-Signalform. Unter Punkt 29 wird die IST-Signalform des Antwortsignals gesampelt und abgespeichert. Anschließend werden bei Programmpunkt die unter Punkt 24 gesampelte und gespeicherte SOLL-Signalform des Anregungssignals und die IST-Signalform des Antwortsignals phasenverschoben und miteinander verglichen bzw. korreliert. Die Phasenverschiebung ist notwendig, da das Antwortsignal zum Anregungssignal aufgrund der Laufzeit zwischen dem ersten piezoelektrischen Element 1 und dem zweiten piezoelektrischem Element 3 zeitlich verschoben ist. Über einen geeigneten Algorithmus, z.B. über eine FFT, wird bei Punkt 31 eine korrigierte SOLL-Signalform bestimmt. Diese korrigierte SOLL-Signalform wird auf den Programmpunkt 25 rückgeführt und abgespeichert. Die Programmpunkte 26 bis 31 werden sukzessive solange durchlaufen, bis die IST-Signalform und die SOLL-Signalform übereinstimmen.

### Bezugszeichenliste

1 erstes piezoelektrisches Element
2 erste polarisierte Zone
3 zweites piezoelektrisches Element
4 zweite polarisierte Zone
5 erste Stirnfläche
6 zweite Stirnfläche
7 Signalgenerator
8 Korrekturschaltung
9 Koppelmedium
10 Speichereinheit
11 Auswerteeinheit
12 Endstufe / Verstärker

## Patentansprüche

1. Verfahren zur Bestimmung und/oder Überwachung einer Prozessgröße,
wobei ein zeitlich begrenztes Anregungssignal (U(t)), das durch zumindest eine SOLL-Größe bzw. durch eine SOLL-Signalform beschrieben wird, einem ersten piezoelektrischen Element (1) oder einer ersten polarisierten Zone (2) eines piezoelektrischen Elements (1) zugeführt wird,
wobei das Antwortsignal (*Uₐ*(t))*,* das durch zumindest eine zur SOLL-Größe bzw. zur SOLL-Signalform korrespondierende IST-Größe bzw. IST-Signalform beschrieben wird, von einem zweiten piezoelektrischen Element (3), das über ein Koppelmedium (9) zur Vermeidung von Reflexionen mit dem ersten piezoelektrische Element (1) gekoppelt und in unmittelbarer Nachbarschaft zu diesem angeordnet ist, oder von einer zweiten polarisierten Zone (4) des piezoelektrischen Elements (1) aufgenommen wird,
wobei die IST-Größe bzw. die IST-Signalform des Antwortsignals (*Uₐ*(t)) und die SOLL-Größe bzw. die SOLL-Signalform des Antwortsignals (*Uₐ*(t)) miteinander verglichen werden,
wobei im Falle einer Abweichung der IST-Größe bzw. der IST-Signalform des Antwortsignals (*Uₐ*(t)) von der SOLL-Größe bzw. der SOLL-Signalform des Antwortsignals (*Uₐ*(t)) das Anregungssignal (U(t)) so modifiziert wird, dass die IST-Größe bzw. die IST-Signalform von dem ersten piezoelektrischen Element (1) bzw. von der ersten polarisierten Zone (2) des piezoelektrischen Elements (1) ausgesandten Ultraschall-Messsignal zumindest näherungsweise gleich ist der SOLL-Größe bzw. der SOLL-Signalform des Antwortsignals (*Uₐ*(t)), und wobei anhand des Ultraschall-Messsignals, das durch die definierte SOLL-Größe bzw. die definierte SOLL-Signalform beschreibbar ist, die Prozessgröße über ein Schall-Mitnahmeverfahren oder über ein Echoverfahren bestimmt wird.

2. Verfahren nach Anspruch 1,
wobei das durch die vorgegebene SOLL-Größe bzw. die SOLL-Signalform beschriebene Anregungssignal (U(t)) erzeugt wird,
wobei das Anregungssignal (U(t)) einer ersten polarisierten Zone (2) des piezoelektrischen Elements (1) zugeführt wird,
wobei das durch die zumindest eine IST-Größe bzw. durch die IST-Signalform beschriebene Antwortsignal (*Uₐ*(t)) in einer zweiten polarisierten Zone (4) des piezoelektrischen Elements (1) abgegriffen wird und
wobei im Falle einer Abweichung der IST-Größe bzw. der IST-Signalform des Antwortsignals (*Uₐ*(t)) von der SOLL-Größe bzw. der SOLL-Signalform des Antwortsignals (*Uₐ*(t)) das Anregungssignal (U(t) so modifiziert wird, dass das Antwortsignal (*Uₐ*(t)) zumindest näherungsweise durch die vorgegebene SOLL-Größe bzw. die SOLL-Signalform beschrieben wird.

3. Verfahren nach Anspruch 1,
wobei das durch die vorgegebene SOLL-Größe bzw. SOLL-Signalform beschriebene Anregungssignal (U(t)) dem ersten piezoelektrischen Element (1) zugeführt wird,
wobei das durch eine zur SOLL-Größe bzw. zur SOLL-Signalform korrespondierende IST-Größe bzw. IST-Signalform beschriebene Antwortsignal (*Uₐ*(t)) von dem zweiten piezoelektrischen Element (3) abgegriffen wird und
wobei im Falle einer Abweichung der IST-Größe bzw. der IST-Signalform des Antwortsignals (*Uₐ*(t)) von der SOLL-Größe bzw. der SOLL-Signalform des Antwortsignals (*Uₐ*(t)) das Anregungssignal (U(t)) so modifiziert wird, dass das Antwortsignal (*Uₐ*(t)) zumindest näherungsweise durch die vorgegebene SOLL-Größe bzw. SOLL-Signalform beschrieben wird.

4. Verfahren nach Anspruch 1, 2 oder 3,
wobei die IST-Größe bzw. die IST-Signalform des Antwortsignals (*Uₐ*(t)) durch Änderung der an die erste polarisierte Zone (2) des piezoelektrischen Elements (1) angelegten Spannung oder durch Änderung der an das erste piezoelektrische Element (1) angelegten Spannung modifiziert wird.

5. Verfahren nach Anspruch 4,
wobei die SOLL-Spannung des Antwortsignals (*Uₐ*(t)) mit der IST-Spannung des Antwortsignals (*Uₐ*(t)) verglichen wird und
wobei eine Abweichung zwischen den beiden Spannungen über eine Differenzverstärkung korrigiert wird.

6. Verfahren nach einem oder mehreren der Ansprüche 1-5,
wobei die SOLL-Signalform des Antwortsignals (*Uₐ*(t)) ermittelt und in Abhängigkeit von den im Prozess und/oder im System herrschenden Bedingungen (*Xᵢ*) jeweils als Signalform des Anregungssignal (U(t; *Xᵢ*)) abgespeichert wird und
wobei die auf die herrschenden Prozess- und/oder Systembedingungen abgestimmte Signalform als Anregungssignal (U(t; *Xᵢ*)) für die zumindest eine Zone (2, 4) des piezoelektrischen Elements (1) oder als Anregungssignal (U(t; *Xᵢ*)) für das erste piezoelektrische Element (1) verwendet wird.

7. Verfahren nach Anspruch 6,
wobei die unter bestimmten Prozess- und/oder Systembedingungen ermittelte Signalform als Anregungssignal (U(t; *Xᵢ*)) dem ersten piezoelektrischen Element (1) zugeführt wird und
wobei im Falle einer Abweichung der Signalform des zweiten piezoelektrischen Elements (3) von der in Abhängigkeit von Prozess- und/oder Systembedingungen (*Xᵢ*) gespeicherten Signalform des Anregungssignals (U(t; *Xᵢ*)) eine Fehlermeldung generiert wird.

8. Vorrichtung zur Bestimmung und/oder Überwachung einer Prozessgröße,
wobei ein zeitlich begrenztes Anregungssignal (U(t)), das durch zumindest eine SOLL-Größe bzw. durch eine SOLL-Signalform beschreibbar ist, einem ersten piezoelektrischen Element (1),
wobei das piezoelektrische Element (1; 3) scheibenförmig ausgebildet ist und zwei gegenüberliegende Stirnflächen (5, 6) aufweist, oder einer ersten polarisierten Zone (2) eines piezoelektrischen Elements (1) zuführbar ist, wobei das Antwortsignal (*Uₐ*(t)), das durch zumindest eine zur SOLL-Größe bzw. zur SOLL-Signalform korrespondierende IST-Größe bzw. IST-Signalform beschreibbar ist, von einem zweiten piezoelektrischen Element (3), wobei das erste piezoelektrische Element (1) und das zweite piezoelektrische Element (3) über ein Koppelmedium (9) zur Vermeidung von Reflexionen miteinander gekoppelt sind und in unmittelbarer Nachbarschaft zueinander angeordnet sind, oder von einer zweiten polarisierten Zone (4) des piezoelektrischen Elements (1) aufnehmbar ist,
wobei die IST-Größe bzw. die IST-Signalform des Antwortsignals (*Uₐ*(t)) und die SOLL-Größe bzw. die SOLL-Signalform des Antwortsignals (*Uₐ*(t)) von einer Korrekturschaltung (8) miteinander vergleichbar sind,
wobei im Falle einer Abweichung der IST-Größe bzw. der IST-Signalform des Antwortsignals (*Uₐ*(t)) von der SOLL-Größe bzw. der SOLL-Signalform des Antwortsignals (*Uₐ*(t)) das Anregungssignal (U(t)) von der Korrekturschaltung (8) so modifizierbar ist, dass die IST-Größe bzw. die IST-Signalform von dem ersten piezoelektrischen Element (1) bzw. von der ersten polariserten Zone (2) des piezoelektrischen Elements (1) ausgesandten Ultraschall-Messsignal zumindest näherungsweise gleich ist der SOLL-Größe bzw. der SOLL-Signalform des Antwortsignals (*Uₐ*(t)), und
wobei anhand des Ultraschall-Messsignals, das durch die definierte SOLL-Größe bzw. die definierte SOLL-Signalform beschreibbar ist, die Prozessgröße über ein Schall-Mitnahmeverfahren oder über ein Echoverfahren bestimmbar ist.

9. Vorrichtung nach Anspruch 8,
wobei das piezoelektrische Element (1) in unterschiedlichen Zonen (2, 4) eine voneinander unabhängige Polarisation aufweist und
wobei die Zonen (2, 4) mit der voneinander unabhängigen Polarisation auf derselben Stirnfläche (5; 6) des piezoelektrischen Elements (1) angeordnet sind.

10. Vorrichtung nach Anspruch 8 oder 9,
wobei ein Signalgenerator (7) vorgesehen ist, der das zeitlich begrenzte, durch eine Größe bzw. eine Signalform beschriebene Anregungssignal (U(t)) der ersten polarisierten Zone (2) des piezoelektrischen Elements (1) zuführt, wobei eine Korrekturschaltung (8) vorgesehen ist, die die korrespondierende IST-Größe bzw. die korrespondierende IST-Signalform des Antwortsignals (*Uₐ*(t)) aus der zweiten polarisierten Zone (4) des piezoelektrischen Elements (1) abgreift und mit der SOLL-Größe bzw. der SOLL-Signalform des Antwortsignals (*Uₐ*(t)) vergleicht, und
wobei die Korrekturschaltung (8) die erste polarisierte Zone (2) im Falle einer Abweichung der SOLL-Größe und IST-Größe bzw. der SOLL-Signalform und IST-Signalform des Antwortsignals (*Uₐ*(t)) mit einem Kompensationssignal (*U_{K}*(t)) beaufschlagt, das so bemessen ist, dass die IST-Größe bzw. die IST-Signalform des Antwortsignals (*Uₐ*(t)) näherungsweise gleich ist der SOLL-Größe bzw. die SOLL-Signalform des Antwortsignals (*Uₐ*(t)).

11. Vorrichtung nach Anspruch 8,
wobei eine Speichereinheit (10) vorgesehen ist, in der Größen bzw. Signalformen des Antwortsignals (U(t; *Xᵢ*)) in Abhängigkeit von den im Prozess- und/oder System herrschenden Bedingungen abgespeichert sind.

12. Vorrichtung nach Anspruch 8,
wobei eine Auswerteeinheit (11) vorgesehen ist, die eine Abweichung einer IST-Größe oder einer IST-Signalform des Antwortsignals (U(t; *Xᵢ*)) von der entsprechenden, unter definierten Prozess- und/oder Systembedingungen (*Xᵢ*) aufgezeichneten SOLL-Größe bzw. SOLL-Signalform des Antwortsignals (U(t; *Xᵢ*)) erkennt und eine Fehlermeldung generiert.

## Claims

1. Procedure for determining and/or monitoring a process variable, wherein a time-limited excitation signal (U(t)), which is described by at least a TARGET variable or a TARGET signal form, is supplied to a first piezoelectric element (1) or a first polarized zone (2) of a piezoelectric element (1),
wherein the response signal (Uₐ (t)), which is described by an ACTUAL variable or ACTUAL signal form that corresponds, respectively, to the TARGET variable or the TARGET signal form is registered by a second piezoelectric element (3), which is coupled with the first piezoelectric element (1) via a coupling medium (9) in order to avoid reflections, and is arranged in the immediate vicinity of said piezoelectric element, or by a second polarized zone (4) of the piezoelectric element (1),
wherein the ACTUAL variable or the ACTUAL signal form of the response signal (Uₐ (t)) and the TARGET variable or the TARGET signal form of the response signal (Uₐ (t)) are compared with one another,
wherein, in the event of a deviation between the ACTUAL variable or the ACTUAL signal form of the response signal (Uₐ (t)) from the TARGET variable or the TARGET signal form, respectively, of the response signal (Uₐ (t)), the excitation signal (U(t)) is modified in such a way that the ACTUAL variable or the ACTUAL signal form of the ultrasonic measuring signal emitted by the first piezoelectric element (1) or by the first polarized zone (2) of the piezoelectric element (1) is at least approximately equal to the TARGET variable or the TARGET signal form, respectively, of the response signal (Uₐ (t)), and wherein the process variable is determined via a sound entrainment method or an echo method using the ultrasonic measuring signal that can be described by the defined TARGET variable or the defined TARGET signal form, respectively.

2. Procedure as claimed in Claim 1,
wherein the excitation signal (U(t)) specified by the TARGET variable or TARGET signal form is generated,
wherein the excitation signal (U(t)) is supplied to a first polarized zone (2) of the piezoelectric element (1),
wherein the response signal (Uₐ (t)) described by the at least one ACTUAL variable and by the ACTUAL signal form is tapped in a second polarized zone (4) of the piezoelectric element (1) and
wherein if the ACTUAL variable or the ACTUAL signal form of the response signal (Uₐ (t)) deviates from the TARGET variable or the TARGET signal form, respectively, of the response signal (Uₐ (t)), the excitation signal (U(t) is modified in such a way that the response signal (Uₐ (t)) is at least approximately described by the specified TARGET variable or TARGET signal form.

3. Procedure as claimed in Claim 1,
wherein the excitation signal (U(t)) described by the predefined TARGET variable or TARGET signal form is supplied to the first piezoelectric element (1), wherein the response signal (Uₐ (t)) described by an ACTUAL variable or ACTUAL signal form corresponding, respectively, to the TARGET variable or TARGET signal form is tapped by the second piezoelectric element (3) and wherein in the event of a deviation between the ACTUAL variable or the ACTUAL signal form of the response signal (Uₐ (t)) from the TARGET variable or the TARGET signal form of the response signal (Uₐ (t)), the excitation signal (U(t)) is modified in such a way that the response signal (Uₐ (t)) is described at least approximately by the predefined TARGET variable or TARGET signal form.

4. Procedure as claimed in Claim 1, 2 or 3,
wherein the ACTUAL variable or the ACTUAL signal form of the response signal (Uₐ (t)) is modified by a change in the voltage applied to the first polarized zone (2) of the piezoelectric element (1) or by a change in the voltage applied to the first piezoelectric element (1).

5. Procedure as claimed in Claim 4,
wherein the TARGET voltage of the response signal (Uₐ (t)) is compared with the ACTUAL voltage of the response signal (Uₐ (t)) and
wherein a deviation between the two voltages is corrected by a differential amplification.

6. Procedure as claimed in at least one or more of the Claims 1 to 5,
wherein the TARGET signal form of the response signal (Uₐ (t)) is determined and saved as a signal form of the excitation signal (U(t; Xᵢ)) depending on the conditions (Xᵢ) present in the process and/or in the system, and
wherein the signal form adapted to the process and/or system conditions present is used as the excitation signal (U(t; Xᵢ)) for the at least one zone (2, 4) of the piezoelectric element (1) or as the excitation signal (U(t; Xᵢ)) for the first piezoelectric element (1).

7. Procedure as claimed in Claim 6,
wherein the signal form determined under certain process and system conditions is supplied as the excitation signal (U(t; Xᵢ)) to the first piezoelectric element (1) and
wherein an error message is generated in the event of a deviation of the signal form of the second piezoelectric element (3) from the signal form of the excitation signal (U(t; Xᵢ)) saved depending on process and/or system conditions (Xᵢ).

8. Apparatus designed to determine and/or monitor a process variable wherein a time-limited excitation signal (U(t)), which can be described by at least a TARGET variable or by a TARGET signal form, is supplied to a first piezoelectric element (1),
wherein the piezoelectric element (1, 3) is designed in the form of a disk and has two opposing faces (5, 6), or can be supplied to a first polarized zone (2) of a piezoelectric element (1),
wherein the response signal (Uₐ (t)), which can be described by at least an ACTUAL variable or an ACTUAL signal form corresponding to the TARGET variable or the TARGET signal form, can be recorded by a second piezoelectric element (3), wherein the first piezoelectric element (1) and the second piezoelectric element (3) are coupled with one another via a coupling medium (9) with a view to avoiding reflections and are arranged in immediate proximity to one another, or can be recorded by a second polarized zone (4) of the piezoelectric element (1),
wherein the ACTUAL variable or the ACTUAL signal form of the response signal (Uₐ (t)) and the TARGET variable or the TARGET signal form of the response signal (Uₐ (t)) can be compared with one another by a correction circuit (8), wherein, in the event that the ACTUAL variable or the ACTUAL signal form of the response signal (Uₐ (t)) deviates, respectively, from the TARGET variable or the TARGET signal form of the response signal (Uₐ (t)), the excitation signal (U(t)) can be modified by the correction circuit (8) in such a way that the ACTUAL variable or the ACTUAL signal form of the ultrasonic measuring signal emitted by the first piezoelectric element (1) or by the first polarized zone (2) of the piezoelectric element (1) is at least approximately equal to the TARGET variable or the TARGET signal form of the response signal (Uₐ (t)), and
wherein the process variable can be determined by a sound entrainment method or an echo method using the ultrasonic measuring signal that can be described by the defined TARGET variable or the defined TARGET signal form.

9. Apparatus as claimed in Claim 8,
wherein, in different zones (2, 4), the piezoelectric element has a polarization that is independent of the polarization in the other zones and
wherein the zones (2, 4) with the polarization that is independent of the polarization in the other zones are arranged on the same front face (5, 6) of the piezoelectric element (1).

10. Apparatus as claimed in Claim 8 or 9,
wherein a signal generator (7) is provided which supplies the time-limited excitation signal (U(t)), which is described by a variable or a signal form, to the first polarized zone (2) of the piezoelectric element (1),
wherein a correction circuit (8) is provided, which taps the corresponding ACTUAL variable or the corresponding ACTUAL signal form of the response signal (Uₐ (t)) from the second polarized zone (4) of the piezoelectric element (1) and compares it with the TARGET variable or the TARGET signal form of the response signal (Uₐ (t)), and
wherein the correction circuit (8) supplies a compensation signal (U_{K} (t)) to the first polarized zone (2) in the event of a deviation of the TARGET variable and the ACTUAL variable or the TARGET signal form and ACTUAL signal form of the response signal (Uₐ (t)), said compensation signal being such that the ACTUAL variable or the ACTUAL signal form of the response signal (Uₐ (t)) is approximately equal to the TARGET variable or the TARGET signal form of the response signal (Uₐ (t)).

11. Apparatus as claimed in Claim 8,
wherein a memory unit (10) is provided in which variables or signal forms of the response signal (U(t; Xᵢ)) are saved depending on the conditions present in the process and/or system.

12. Apparatus as claimed in Claim 8,
wherein an evaluation unit (11) is provided, which detects a deviation of an ACTUAL variable or an ACTUAL signal form of the response signal (U(t; Xᵢ)) from the corresponding TARGET variable or TARGET signal form of the response signal (U(t; Xᵢ)), which is recorded under defined process and/or system conditions (Xᵢ), and generates an error message.

## Revendications

1. Procédé destiné à la détermination et/ou la surveillance d'une grandeur process, pour lequel est acheminé un signal d'excitation (U(t)) limité dans le temps, qui est décrit par au moins une grandeur de consigne ou une forme de signal de consigne, à un premier élément piézoélectrique (1) ou à une première zone polarisée (2) d'un élément piézoélectrique (1),
pour lequel le signal de réponse (Uₐ (t)), qui est décrit par au moins une grandeur réelle ou une forme de signal réelle correspondant à la grandeur de consigne ou une forme de signal de consigne, est enregistré par un deuxième élément piézoélectrique (3), lequel est couplé par l'intermédiaire d'un moyen de couplage (9) en vue d'éviter les réflexions avec le premier élément piézoélectrique (1) et est disposé à proximité immédiate de ce dernier, ou par une deuxième zone polarisée (4) de l'élément piézoélectrique (1),
pour lequel la grandeur réelle ou la forme de signal réelle du signal de réponse (Uₐ (t)), et la grandeur de consigne ou la forme de signal de consigne du signal de réponse (Uₐ (t)) sont comparées entre elles,
pour lequel, en cas d'écart entre la grandeur réelle ou la forme de signal réelle du signal de réponse (Uₐ (t)) et la grandeur de consigne ou la forme de signal de consigne du signal de réponse (Uₐ (t)), le signal d'excitation (U(t)) est modifié de telle sorte que la grandeur réelle ou la forme de signal réelle du signal de mesure ultrasonore émis par le premier élément piézoélectrique (1) ou par la première zone polarisée (2) de l'élément piézoélectrique (1) est au moins approximativement égale à la grandeur de consigne ou la forme de signal de consigne du signal de réponse (Uₐ (t)), et pour lequel, au moyen du signal de mesure ultrasonore, qui peut être décrit par la grandeur de consigne définie ou par la forme de signal de consigne définie, la grandeur process est déterminée par le biais d'une méthode par entraînement sonore ou d'une méthode par écho.

2. Procédé selon la revendication 1,
pour lequel est généré le signal d'excitation (U(t)) décrit par la grandeur de consigne prédéfinie ou la forme de signal de consigne,
pour lequel le signal d'excitation (U(t)) est acheminé à une première zone polarisée (2) de l'élément piézoélectrique (1),
pour lequel le signal de réponse (Uₐ (t)) décrit par l'au moins une grandeur réelle ou par l'au moins une forme de signal réelle est prélevé dans une deuxième zone polarisée (4) de l'élément piézoélectrique (1) et
pour lequel, en cas d'écart de la grandeur réelle ou de la forme de signal réelle du signal de réponse (Uₐ (t)) par rapport à la grandeur de consigne ou la forme de signal de consigne du signal de réponse (Uₐ (t)), le signal d'excitation (U(t) est modifié de telle sorte que le signal de réponse (Uₐ (t)) est décrit au moins approximativement par la grandeur de consigne ou la forme de signal de consigne prédéfinie.

3. Procédé selon la revendication 1,
pour lequel le signal d'excitation (U(t)) décrit par la grandeur de consigne prédéfinie ou la forme de signal de consigne est acheminé au premier élément piézoélectrique (1),
pour lequel le signal de réponse (Uₐ (t)) décrit par la grandeur réelle ou la forme de signal réelle, correspondant à la grandeur de consigne ou à la forme de signal de consigne, est prélevé du deuxième élément piézoélectrique (3) et
pour lequel, en cas d'écart de la grandeur réelle ou de la forme de signal réelle du signal de réponse (Uₐ (t)) par rapport à la grandeur de consigne ou la forme de signal de consigne du signal de réponse (Uₐ (t)), le signal d'excitation (U(t)) est modifié de telle sorte que le signal de réponse (Uₐ (t)) est décrit au moins approximativement par la grandeur de consigne ou la forme de signal de consigne prédéfinie.

4. Procédé selon la revendication 1, 2 ou 3,
pour lequel la grandeur réelle ou la forme de signal réelle du signal de réponse (Uₐ (t)) est modifiée par la variation de la tension appliquée à la première zone polarisée (2) de l'élément piézoélectrique (1) ou par la variation de la tension appliquée au premier élément piézoélectrique (1).

5. Procédé selon la revendication 4,
pour lequel la tension de consigne du signal de réponse (Uₐ (t)) est comparée avec la tension réelle du signal de réponse (Uₐ (t)) et
pour lequel un écart entre les deux tensions est corrigé par l'intermédiaire d'une amplification différentielle.

6. Procédé selon l'une ou plusieurs des revendications 1 à 5,
pour lequel la forme de consigne du signal de réponse (Uₐ (t)) est déterminée et enregistrée en fonction des conditions (Xᵢ) régnant dans le process et/ou dans le système, respectivement en tant que forme du signal d'excitation (U(t; Xᵢ)) et pour lequel la forme de signal adaptée aux conditions régnant dans le process et/ou dans le système est utilisée en tant que signal d'excitation (U(t; Xᵢ)) pour l'au moins une zone (2, 4) de l'élément piézoélectrique (1) ou en tant que signal d'excitation (U(t; Xᵢ)) pour le premier élément piézoélectrique (1).

7. Procédé selon la revendication 6,
pour lequel la forme de signal déterminée dans des conditions définies du process et/ou du système est acheminée en tant que signal d'excitation (U(t; Xᵢ)) au premier élément piézoélectrique (1) et
pour lequel, en cas d'écart de la forme de signal du deuxième élément piézoélectrique (3) par rapport à la forme du signal d'excitation (U(t; Xᵢ)) enregistrée en fonction des conditions du process et/ou du système (Xᵢ), un message d'erreur est généré.

8. Dispositif destiné à la détermination et/ou la surveillance d'une grandeur process, pour lequel un signal d'excitation (U(t)) limité dans le temps, qui peut être décrit par au moins une grandeur de consigne ou par une forme de signal de consigne, est acheminé à un premier élément piézoélectrique (1),
pour lequel l'élément piézoélectrique (1, 3) est conçu en forme de disque et présente deux surfaces frontales (5, 6) opposées, ou peut être acheminé à une première zone polarisée (2) d'un élément piézoélectrique (1),
pour lequel le signal de réponse (Uₐ (t)), qui peut être décrit par au moins une grandeur réelle ou une forme de signal réelle correspondant à la grandeur de consigne ou une forme de signal de consigne, peut être enregistré par un deuxième élément piézoélectrique (3), le premier élément piézoélectrique (1) étant couplé par l'intermédiaire d'un moyen de couplage (9) avec le deuxième élément piézoélectrique (3) en vue d'éviter les réflexions, et étant disposés à proximité immédiate l'un de l'autre, ou peut être enregistré par une deuxième zone polarisée (4) de l'élément piézoélectrique (1),
pour lequel la grandeur réelle ou la forme de signal réelle du signal de réponse (Uₐ (t)) et la grandeur de consigne ou la forme de signal de consigne du signal de réponse (Uₐ (t)) peuvent être comparées entre elles par un circuit de correction (8),
pour lequel, en cas d'écart entre la grandeur réelle ou de la forme de signal réelle du signal de réponse (Uₐ (t)) et la grandeur de consigne ou la forme de signal de consigne du signal de réponse (Uₐ (t)), le signal d'excitation (U(t)) est modifiable par le circuit de correction (8) de telle sorte que la grandeur réelle ou la forme de signal réelle du signal de mesure ultrasonore émis par le premier élément piézoélectrique (1) ou par la première zone polarisée (2) de l'élément piézoélectrique (1) est au moins approximativement égale à la grandeur de consigne ou la forme de signal de consigne du signal de réponse (Uₐ (t)), et pour lequel, au moyen du signal de mesure ultrasonore, qui peut être décrit par la grandeur de consigne définie ou par la forme de signal de consigne définie, la grandeur process peut être déterminée à l'aide d'une méthode par entraînement sonore ou d'une méthode par écho.

9. Procédé selon la revendication 8,
pour lequel l'élément piézoélectrique (1) présente une polarisation indépendante l'une de l'autre dans différentes zones (2, 4) et
pour lequel les zones (2, 4) dont la polarisation est indépendante l'une de l'autre sont disposées sur la même surface frontale (5, 6) de l'élément piézoélectrique (1).

10. Procédé selon la revendication 8 ou 9,
pour lequel est prévu un générateur de signaux (7), qui achemine le signal d'excitation (U(t)), limité dans le temps, décrit par une grandeur ou un forme de signal, de la première zone polarisée (2) de l'élément piézoélectrique (1), pour lequel est prévu un circuit de correction (8), qui prélève la grandeur réelle correspondante ou la forme de signal réelle correspondante du signal de réponse (Uₐ (t)) à partir de la deuxième zone polarisée (4) de l'élément piézoélectrique (1) et la compare avec la grandeur de consigne ou la forme de signal de consigne du signal de réponse (Uₐ (t)), et
pour lequel le circuit de correction (8) alimente la première zone polarisée (2), dans le cas d'un écart entre la grandeur de consigne et la grandeur réelle ou entre la forme de signal de consigne et la forme de signal réelle du signal de réponse (Uₐ (t)), avec un signal de compensation (U_{K} (t)), lequel est dimensionné de telle sorte que la grandeur réelle ou la forme de signal réelle du signal de réponse (Uₐ (t)) est approximativement égale à la grandeur de consigne ou la forme de signal de consigne du signal de réponse (Uₐ (t)).

11. Procédé selon la revendication 8,
pour lequel est prévue une unité de mémoire (10), dans laquelle les grandeurs ou les formes de signal du signal de réponse (U(t; Xᵢ)) sont enregistrées en fonction des conditions régnant dans le processus et/ou le système.

12. Procédé selon la revendication 8,
pour lequel est prévue une unité d'exploitation (11), laquelle détecte un écart entre une grandeur réelle ou une forme de signal réelle du signal de réponse (U(t; Xᵢ)) et la grandeur de consigne ou la forme de signal de consigne du signal de réponse (U(t; Xᵢ)) enregistrée dans des conditions définies du process et/ou du système (Xᵢ), et génère un message d'erreur.
